# EUROPÄISCHE PATENTSCHRIFT

(11) **EP 0 423 536 B1**
(45) Veröffentlichungstag und Bekanntmachung des Hinweises auf die Patenterteilung: **19.01.1994**
(21) Anmeldenummer: 90118886.2
(22) Anmeldetag: 02.10.1990
(51) Int. Cl.: F16H 61/00

(54) **Übersetzungsregelung eines stufenlos regelbaren Kegelscheibengetriebes für Kraftfahrzeuge**
Control system of a continuously variable transmission for a motor vehicle
Système de commande d'un variateur continu de vitesse pour véhicule à moteur

(30) Priorität: 16.10.1989 DE 3934506
(43) Veröffentlichungstag der Anmeldung: 24.04.1991
(73) Patentinhaber: FORD-WERKE AKTIENGESELLSCHAFT, 50725 Köln (DE); FORD MOTOR COMPANY LIMITED, Brentwood, Essex CM13 3BW (GB); FORD FRANCE S. A., 92506 Rueil-Malmaison (FR)
(72) Erfinder: Bornmann, Günter, W-5000 Köln 91 (DE)
(74) Vertreter: von Puttkamer, Nikolaus, Dipl.-Ing. Patentanwälte Haft, von Puttkamer Berngruber, Czybulka

(56) Entgegenhaltungen:
- EP-A- 0 286 924
- DE-A- 3 307 329
- DE-A- 3 727 633
- GB-A- 926 122
- US-A- 4 685 357

## Beschreibung

Die Erfindung betrifft eine Einrichtung zur Übersetzungsregelung eines stufenlos regelbaren Kegelscheibengetriebes für Kraftfahrzeuge nach dem Oberbegriff des Patentanspruches 1.

Aus der EP-A-0 286 924 geht eine derartige Einrichtung zur Steuerung eines stufenlos regelbaren Kegelscheibengetriebes für Kraftfahrzeuge hervor, das eine vom Antriebsmotor angetriebene als Eingangswelle dienende Primärwelle, und eine über ein endloses Zugglied angetriebene als Abtriebswelle dienende Sekundärwelle aufweist. Dabei bildet sowohl auf der Primärwelle als auch auf der Sekundärwelle jeweils ein Kegelscheibenteil einen Zylinder, in den ein mit dem jeweils anderen Kegelscheibenteil einstückig verbundener Kolben zur Bildung einer Druckkammer eingreift. Beide Druckkammern werden mit einem hohen Druck beaufschlagt, um sowohl primär- als auch sekundärseitig jeweils den nötigen Anpreßdruck der Kegelscheibenteile an das Zugglied zu bewirken.

Zur Verstellung des Übersetzungsverhältnisses ist es aus der genannten EP-A weiterhin bekannt, zwischen den beiden Kegelscheibenteilen der Primärwelle zwei weitere Druckkammern zu bilden, wobei diese beiden Druckkammern durch einen mit dem einen Kegelscheibenteil verbundenen Kolben voneinander getrennt sind, so daß je nach Druckbeaufschlagung dieser beiden Druckkammern eine Verstellung der beiden Kegelscheibenteile in Bezug aufeinander in axialer Richtung erfolgt.

Bei der genannten EP-A wird ein relativ niedriger Druck zur Verstellung des Übersetzungsverhältnisses, d.h. zur Beaufschlagung der zuletzt genannten Druckkammern, durch eine Pumpe erzeugt und wahlweise an die eine oder andere Druckkammer angelegt. Dabei kann dieser relativ niedrige Druck wesentlich kleiner sein, als der Druck zum Anpressen der Kegelscheibenteile an das Zugglied. Die genannte EP-A löst das Problem, daß man bei Getrieben der hier beschriebenen Art zum Einen einen hohen Druck zum Anpressen braucht, wofür aber eine Pumpe mit geringer Fördermenge ausreicht, zum Anderen eine große Fördermenge zum Verstellen, die aber auf einen nur mäßig hohen Druck verdichtet werden muß. Bei der herkömmlichen Art der Druckversorgung mit nur einer einzigen Pumpe muß ständig ein hoher Volumenstrom auf einen hohen Druck gebracht werden, obwohl dieser Volumenstrom nur im Extremfall benötigt wird.
Es wird also ständig ein mehr oder weniger großer Prozentsatz der erzeugten hydraulischen Leistung nutzlos in Wärme umgesetzt. Ein Nachteil dieser Lösung besteht auch darin, daß sowohl die Vorsehung dreier Druckkammern zu Erzeugung des Anpreßdruckes und zur Veränderung des Übersetzungsverhältnisses sowie die Druckbeaufschlagung dieser drei Druckkammern mit unterschiedlich hohen Drücken relativ aufwendig und kompliziert ist.

Die Aufgabe der vorliegenden Erfindung besteht daher darin, eine Einrichtung zum Verstellen des Übersetzungsverhältnisses eines stufenlos regelbaren Kegelscheibengetriebes der eingangs genannten Art dahingehend zu verbessern, daß die Erzeugung des Anpreßdruckes zum Anpressen der Kegelscheibenteile an das Zugglied und des Druckes zum Verstellen des Übersetzungsverhältnisses des Kegelscheibengetriebes relativ einfach möglich sind.

Diese Aufgabe wird durch eine Einrichtung gelöst, die durch die in dem kennzeichnenden Teil des Patentanspruches 1 angegebenen Merkmale gekennzeichnet ist.

Der wesentliche Vorteil besteht darin, daß bei der erfindungsgemäßen Einrichtung primär- und sekundärseitig jeweils nur eine Druckkammer zur Erzeugung des Anpreßdruckes und zur Verstellung des Übersetzungsverhältnisses erforderlich ist. Dabei wird durch eine Verstellpumpe zur Übersetzungsregelung Druckmittel von der Druckkammer an der Primärwelle in die Druckkammer an der Sekundärwelle gepumpt bzw.umgekehrt. Eine solche Verstellpumpe ist dadurch gekennzeichnet, daß sie abhängig von einem Steuersignal einen Druckmittelstrom zwischen einem negativen und einem positiven Extremwert stufenlos variieren kann. Vorteilhafterweise kann als eine derartige Pumpe eine Kombination aus einer vom Motor angetriebenen Zahnradpumpe, die einen drehzahlproportionalen Druckmittelstrom von nur einer Förderrichtung liefert, mit einem Ventil verwendet werden, wobei das Ventil die Umpolung und Regulierung unter der Steuerung durch ein Steuersignal bewirkt.

Weitere vorteilhafte Ausgestaltungen der Erfindung gehen aus den Unteransprüchen hervor. Im folgenden werden die Erfindung und deren Ausgestaltungen im Zusammenhang mit den Figuren näher erläutert. Es zeigt:
- Fig. 1: in schematischer Darstellung den Aufbau der erfindungsgemäßen Einrichtung; und
- Fig. 2 bis 7: Prinzipdarstellungen zur Erläuterung der Arbeitsweise der erfindungsgemäßen Einrichtung.

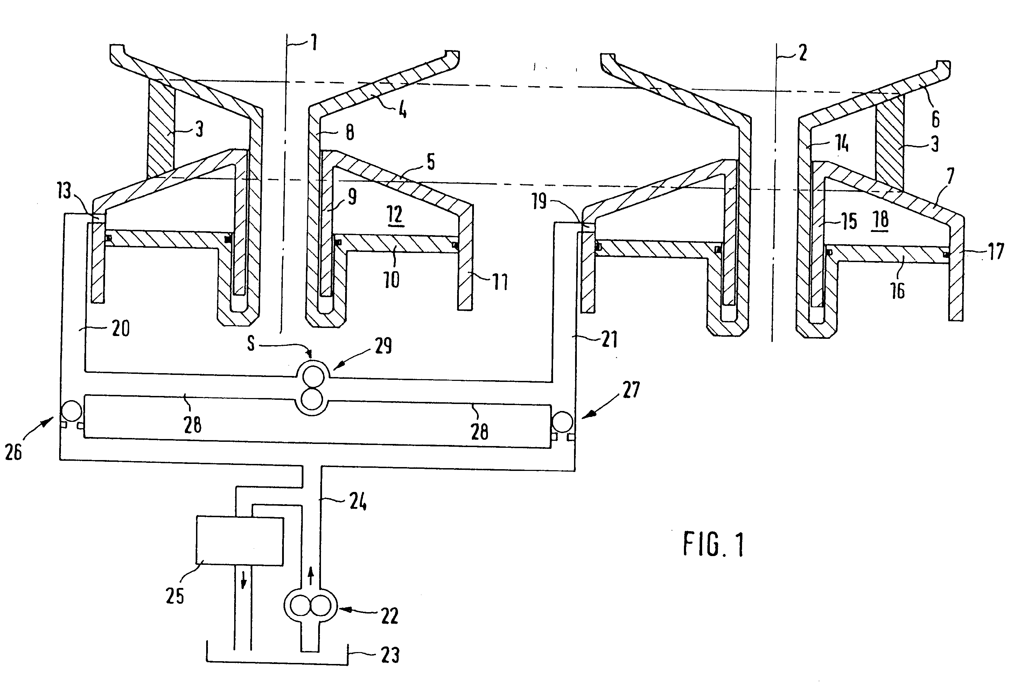

In der Fig. 1 ist die Achse einer Antriebswelle mit 1 und die Achse der Abtriebswelle des stufenlos regelbaren Kegelscheibengetriebes mit 2 bezeichnet. Der Antriebswelle 1 bzw. der Primärwelle sind eine erste Kegelscheibe 4 und eine zweite Kegelscheibe 5 zugeordnet, zwischen denen das Zugglied 3 verläuft. Entsprechend verläuft das Zugglied 3 auf der Seite der Abtriebswelle 2 zwischen einer dieser zugeorndeten dritten Kegelscheibe 6 und einer zugeordneten vierten Kegelscheibe 7. Das erste Kegelscheibenteil 4 ist an einer durch die Antriebswelle 1 angetriebenen Hülse 8 einstückig befestigt, während das Kegelscheibenteil 5 an einer Hülse 9 befestigt ist, die auf der Hülse 8 angeordnet und in axialer Richtung verschiebbar ist. Das dem Kegelscheibenteil 4 abgewandte Ende der Hülse 8 ist mit einem ringförmigen Kolben 10 verbunden, der in einen ringförmigen Zylinder eingreift, der durch das Kegelscheibenteil 5, die Hülse 9 und eine Verlängerung 11 gebildet wird, die an das der Hülse 9 abgewandte Ende des Kegelscheibenteiles 5 angesetzt ist. Der Kolben 10, die Hülse 9, die Verlängerung 11 und das Kegelscheibenteil 5 umschließen eine ringförmige Druckkammer 12, in die über die Öffnung 13 aus einer Druckleitung 20 Druckmittel, beispielsweise Öl mit einem hohen Druck einbringbar ist, um das Kegelscheibenteil 5 gegen das Kegelscheibenteil 4 zu pressen, wobei das Zugglied 3 eine kraftschlüssige Verbindung mit den Kegelscheiben 4 und 5 bekommt.

In der entsprechenden Weise ist auf der Sekundärwelle die Kegelscheibe 6 mit einer Hülse 14 verbunden, die mit der Abtriebswelle 2 in Verbindung steht. Auf der Hülse 14 ist in axialer Richtung verschiebbar eine Hülse 15 gelagert, die mit der Kegelscheibe 7 verbunden ist. Ein mit der Hülse 14 in Verbindung stehender Kolben 16 befindet sich in einem ringförmigen Zylinder, der durch die Hülse 15, das Kegelscheibenteil 7 und eine Verlängerung 17 gebildet wird. Der Kolben 16, die Verlängerung 17, die Hülse 15 und das Kegelscheibenteil 7 umschließen eine Druckkammer 18, die über die Öffnung 19 mit einer Druckleitung 21 in Verbindung steht. Den Druckleitungen 20 und 21 wird durch eine Zahnradpumpe 22 das einem Sumpf 23 entnommene Druckmittel zugeführt. Dieses Druckmittel wird durch eine geeignete Einrichtung zu dem zur Anpressung jeweils optimalen Druck angestaut und erzeugt in den Zylindern 12 und 18 die erforderlichen Anpreßkräfte. Vorzugsweise ist dies so realisiert, daß zwischen der Zahnradpumpe 22 und der Verzweigungsleitung 24 ein Drehmomentfühler 25 angeordnet ist, der den von der Zahnradpumpe 22 gelieferten Förderstrom zu einem drehmomentabhängig gesteuerten Druck anstaut.

Um mit der bisher beschriebenen Anordnung gleichzeitig neben der drehmomentabhängigen Erzeugung des Anpreßdruckes auch eine Verstellung der Übersetzung des stufenlos regelbaren Kegelscheibengetriebes zu ermöglichen, ist es erforderlich, daß die zunächst allein vom Anpreßdruck bestimmten Drücke in den Zylindern 12 bzw. 18, die, da er in gleicher Weise auf beide Zylinder wirkt, gleich sind, in ein Ungleichgewicht gebracht werden. Dies muß so erfolgen, daß der Druck in dem Zylinder mit dem jeweils niedrigeren Druck vom Anpreßdrucksystem 25 kontrolliert wird und der Druck in dem jeweils anderen um einen zusätzlichen Summanden erhöht wird.

Hierzu fördert eine Pumpe, die im folgenden Verstellpumpe 29 genannt wird, Druckmittel vom Zylinder 12 in den Zylinder 18 bzw. umgekehrt, und zwar gesteuert von einem Steuersignal S, das die Förderrichtung bestimmt und den Förderstrom stufenlos kontrolliert. Diese Pumpe 29 befindet sich in einer Verbindungsleitung 28, die den Bereich der Leitung 20 zwischen der Öffnung 13 und dem später beschriebenen Rückschlagventil 26 mit dem Bereich der Leitung 21 zwischen der Öffnung 19 und dem später beschriebenen Rückschlagventil 27 verbindet.

Eine Drucküberhöhung kann nur erzielt werden, wenn der Förderstrom der Verstellpumpe 29 nicht durch die Verbindungsleitung 24 kurzgeschlossen wird. Daher sind zwei Rückschlagventile 26 und 27 erforderlich, die einerseits die Drucküberhöhung ermöglichen und andererseits dafür sorgen, daß der Druck in dem Zylinder mit dem jeweils niedrigeren Druck niemals kleiner werden kann als der Druck in der Verbindungsleitung 24 (Anpreßdruck).

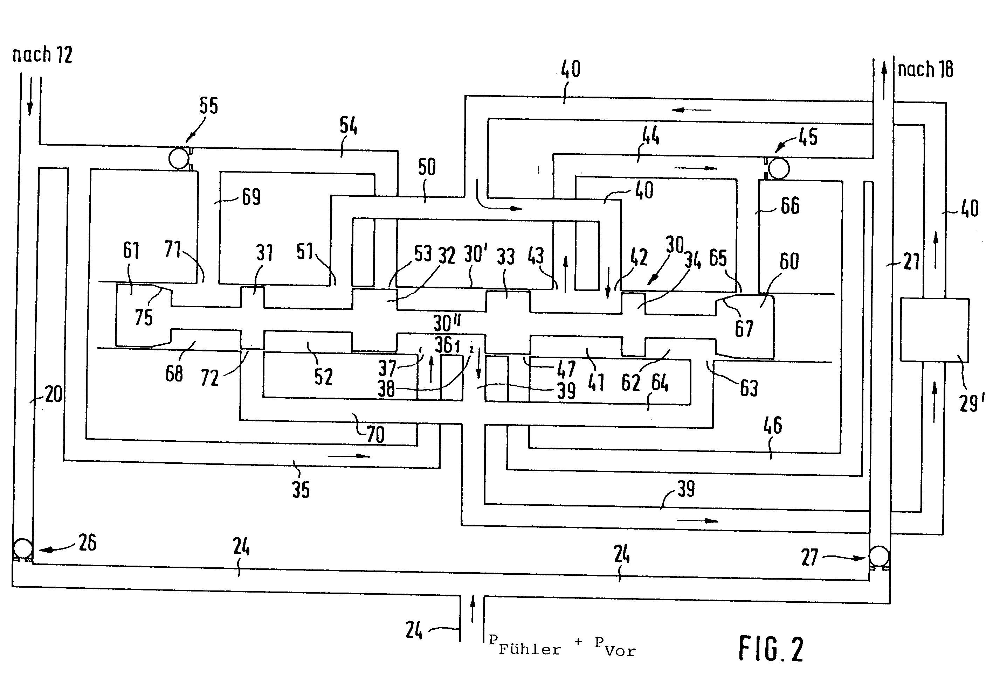

Nach einem Ausführungsbeispiel kann an Stelle einer Verstellpumpe 29 eine durch den Motor angetriebene Zahnradpumpe verwendet werden, deren Druckmittelsstrom drehzahlabhängig und richtungsmäßig sowie größenmäßig nicht frei kontrollierbar ist. Es ist daher zusätzlich erforderlich, ein Ventil vorzusehen, das den von der Zahnradpumpe 29' gelieferten Ölstrom in Abhängigkeit von dem Steuersignal S umpolt und reguliert. Dieses Ventil wird im Zusammenhang mit den Figuren 2 bis 6 näher erläutert. Einzelheiten dieser Figuren, die im Zusammenhang mit der Fig. 1 bereits erläutert wurden, sind in der entsprechenden Weise bezeichnet.

Das von der Zahnradpumpe (22 in Fig. 1) mit hohem Druck (P_{Fühler} + P_{Vor}) gelieferte Druckmittel wird einerseits über die Abzweigleitung 24, das Rückschlagventil 26 und die Druckleitung 20 an die primärseitige Druckkammer (12 in Fig. 1) und andererseits über die Abzweigleitung 24, das Rückschlagventil 25 und die Druckleitung 21 an die sekundärseitige Druckkammer (18 in Fig. 1) angelegt. Dieser Druck bewirkt die drehmomentabhängige Anpreßkraft, mit der die primärseitigen Kegelscheibenteile 4, 5 und die sekundärseitigen Kegelscheibenteile 6, 7 an das Zugglied 3 angepreßt werden. Zur Verstellung des Übersetzungsverhältnisses des kontinuierlich variablen Kegelscheibengetriebes wird durch die Zahnradpumpe 29' je nach Stellung des Umpol- und Regulierventiles 30 Druckmittel von der primärseitigen Druckkammer 12 über die Druckleitung 20, das Ventil 30, die Zahnradpumpe 29' und die Druckleitung 21 in die sekundärseitige Druckkammer 18 gepumpt bzw. umgekehrt.

Das Ventil 30 weist in einem Gehause 30' an einem Ventilschieber 30'' vier Steuerkanten 31 bis 34 zur Umpolung des von der Zahnradpumpe 29' geförderten Druckmittelstromes auf.

Gemäß Fig. 2, die das Ventil 30 in seiner einen Stellung zeigt, zweigt der Weg von der primärseitigen Druckkammer 12 zur sekundärseitigen Druckkammer 18 zwischen der Druckkammer 12 und dem Rückschlagventil 26 von der Druckleitung 20 in der Form der Druckleitung 35 ab, die über eine Öffnung (erster Zugang) 37 in eine Kammer (erste Kammer) 36 des Umpolventiles 30 führt, die sich zwischen der ersten und zweiten Steuerkante 32 und 33 befindet. Die Kammer 36 führt über einen Ausgang (zweiter Zugang) 38, die mit diesem verbundene Druckleitung 39, die Zahnradpumpe 29', und die Druckleitung 40 über die Eingangsöffnung (fünfter Zugang) 42 in die Kammer (zweite Kammer) 41 des Umpolventiles 30, die sich zwischen den Steuerkanten 33 und 34 befindet. Eine Ausgangsöffnung (vierter Zugang) 43 der Kammer 41 ist über eine Druckleitung 44, in der sich ein drittes Rückschlagventil 45 befindet, mit der Druckleitung 21, die zur sekundärseitigen Druckkammer 18 führt, an einem Ort zwischen der Druckkammer 18 und dem Rückschlagventil 27 verbunden. Das Rückschlagventil 45 öffnet sich, wenn der Druck in der Kammer 41 größer als der Druck in der Leitung 21 ist.

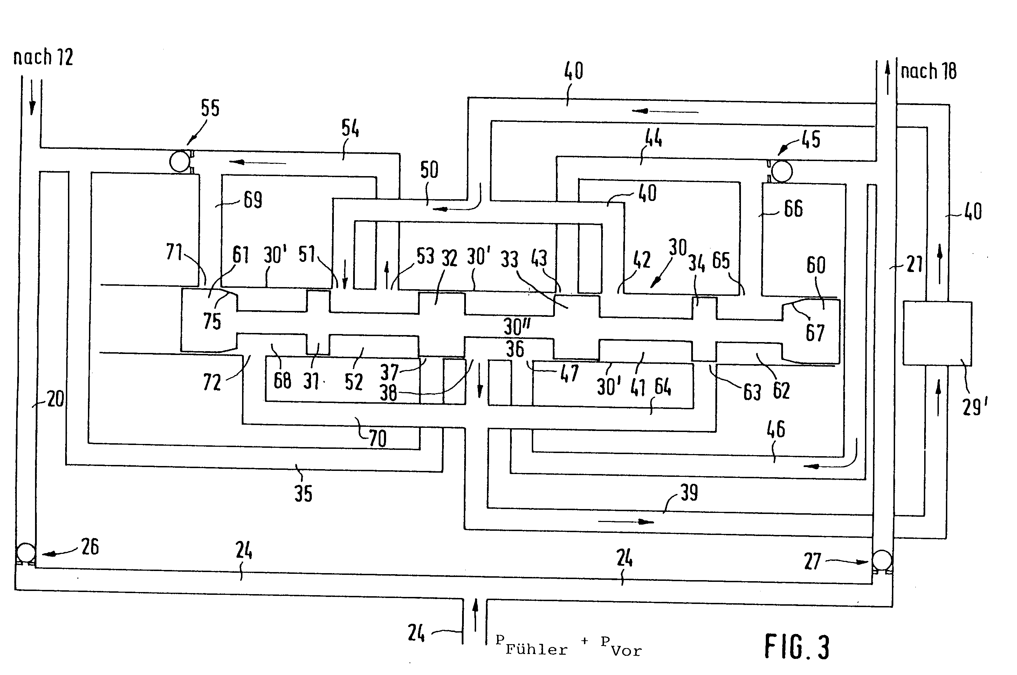

In der anderen Stellung des Ventils 30, d.h. also zur Druckmittelförderung von der sekundärseitigen Druckkammer 18 zur primärseitigen Druckkammer 12, zweigt gemäß Fig. 3 von der Druckleitung 21 zwischen der sekundärseitigen Druckkammer 18 und dem Rückschlagventil 27 eine Druckleitung 46 ab, die über eine Eingangsöffnung (dritter Zugang) 47 in die Kammer 36 des sich in seiner anderen Stellung befindlichen Ventiles 30 führt, die zwischen den Steuerkanten 32 und 33 angeordnet ist. Über die Ausgangsöffnung (zweiter Zugang) 38 der Kammer 36, die Leitung 39, die Zahnradpumpe 29', die Leitung 40 und eine von dieser abzweigende Leitung 50 wird das Druckmittel über die Öffnung (sechster Zugang) 51 in eine Kammer (dritte Kammer) 52 des Ventiles 30 gefördert. Über die Ausgangsöffnung (siebter Zugang) 53 der Kammer 52 des Ventiles 30 und die Druckleitung 54, in der sich ein viertes Rückschlagventil 55 befindet, gelangt das Druckmittel in die Druckleitung 20 an einem Ort zwischen der Druckkammer 12 und dem Rückschlagventil 26 und von dort zur primärseitigen Druckkammer 12. Die Kammer 52 befindet sich zwischen den Steuerkanten 31 und 32.

Das Rückschlagventil 55 öffnet sich, wenn der Druck in der Druckleitung 54 größer ist als der Druck in der Druckkammer 12.

In der einen Stellung des Ventiles 30 (Fig. 2) verschließt die Steuerkante 32 die Öffnung 53, wodurch der Weg von der Kammer 52 über die Leitung 54 zur Druckkammer 12 unterbrochen wird, und die Steuerkante 33 verschließt die Öffnung 47, wodurch der Weg von der Kammer 36 über die Druckleitung 46 zur Druckleitung 21 unterbrochen wird. In der anderen Stellung des Ventiles 30 (Fig. 3) verschließt die Steuerkante 32 die Öffnung 37, wodurch der Weg von der Kammer 36 über die Druckleitung 35 zur Druckleitung 20 unterbrochen wird, und die Steuerkante 33 verschließt die Öffnung 43, wodurch der Weg von der Kammer 41 über die Druckleitung 44 zur Druckleitung 21 unterbrochen wird.

Die Zahnradpumpe 29' muß beim Verstellvorgang einen Druckmittel-Volumenstrom liefern, der gerade so groß ist, wie zum Verstellen des Kegelscheibengetriebes erforderlich ist. Der Volumenstrom muß also zusätzlich zu einer frei wählbaren Flußrichtung auch noch stufenlos regulierbar sein. Der Maximalwert ergibt sich dabei aus der im jeweiligen Anwendungsfall geforderten maximalen Verstellgeschwindigkeit, während der Minimalwert sich aus dem Wert ergibt, der erforderlich ist, um nach der Verstellung (stationärer Fall) die zur jeweiligen Übersetzung gehörende Druckdifferenz zwischen den Druckkammern 12 und 18 zu halten (Ausgleich der Leckölverluste).

Die Zahnradpumpe 29' liefert von sich aus nur einen Förderstrom, der proportional der Motordrehzahl ist. Um diesen stattdessen proportional zu dem Steuersignal S zu machen, wird das Ventil 30 in einer im folgenden näher beschriebenen Weise so erweitert, daß es eine von S gesteuerte Mengenteilung bewirkt, und zwar nach einem Verfahren, das von bekannten Mengenteilern abweicht und ohne Beeinträchtigung des Wirkungsgrades funktioniert. Die von der Zahnradpumpe 29' aufgenommene Leistung ist proportional dem Druck x Volumenstrom und soll aus Wirkungsgrad-Gründen nur in dem Maße anfallen, wie sie auch tatsächlich benötigt wird, d.h. entsprechend der zum Verstellen erforderlichen, über die Anpressungsleistung hinausgehenden Zusatzleistung.

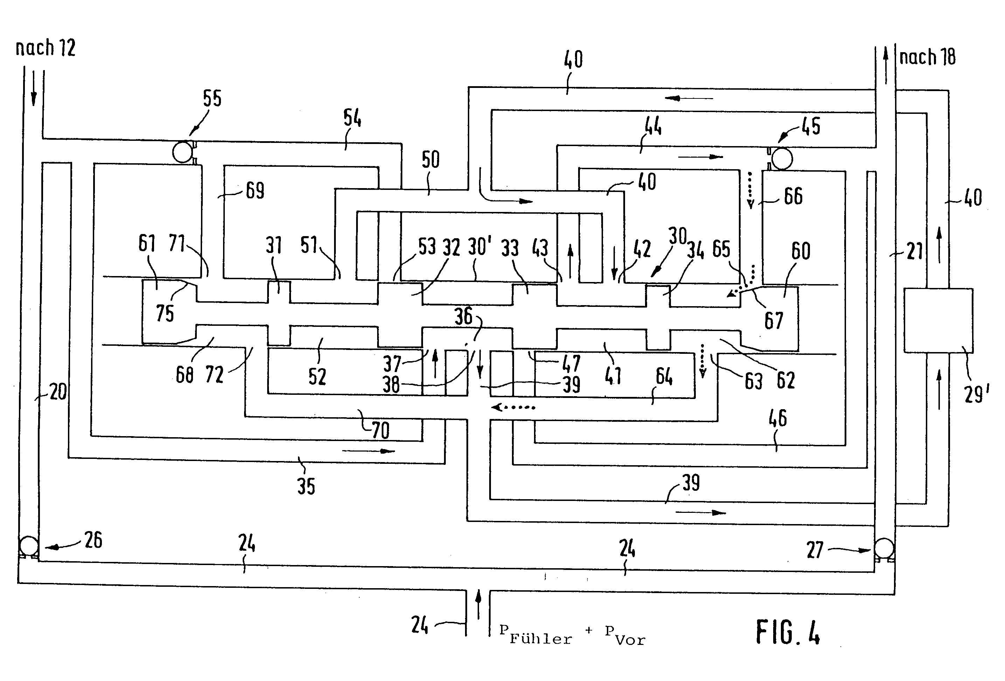

Daher wird nicht der gesamte Förderstrom der Zahnradpumpe 29' auf den erforderlichen Druck angestaut und dann die überschüssige Menge mehr oder weniger nutzlos wieder entspannt, sondern der Förderstrom wird mit einem zwischen 0% und 100% stufenlos variablen Taktverhältnis angestaut, bzw. drucklos (und damit leistungslos) wieder zur Ansaugseite zurückbefördert. Die gesteuerte Menge ist dann proportional dem zeitlichen Mittelwert aus der Menge im EIN-Zustand (Fig. 2) und der Menge Null im AUS-Zustand (Fig. 4) und damit proportional dem extern gesteuerten Taktverhältnis. Die aufgenommene Leistung ist dabei Verstellmenge x Staudruck statt Fördermenge x Staudruck. Hieraus ergibt sich die Wirkungsgradverbesserung.

Das Ventil 30 wird hierzu mit zwei weiteren Steuerkanten 60 und 61 versehen. Dabei bestimmt die Steuerkante 60 zur Förderung in die Druckkammer 18 mit der Steuerkante 34 einen Raum (vierte Kammer) 62 mit einem Zugang (achter Zugang) 63, der über eine Leitung 64 mit der Saugseite (Leitung 39) der Zahnradpumpe 29' in Verbindung steht. Die Steuerkante 60 verschließt in der ersten Position (Fig. 2) einen weiteren Zugang (nennter Zugang) 65 zum Raum 62, der über eine Leitung 66 mit der Förderseite (Leitung 44) der Zahnradpumpe 29' in Verbindung steht.

Da die Drücke in den Druckkammern 12 und 18 im Gegensatz zu dem Gegendruck an der Pumpe 29' nicht pulsieren dürfen, sind die Rückschlag- bzw. Kugelventile 55 und 45 erforderlich. Zu Beginn der EIN-Phase (Fig. 2) steigt der Druck in den Leitungen 66 bzw. 69 von praktisch Null aus sehr schnell an, bis er größer ist als der Druck in der Druckkammer 12 bzw. 18. Von diesem Augenblick an fließt der Förderstrom der Pumpe 29′ in die jeweilige Druckkammer 12 bzw. 18 (wobei der Pumpen-Gegendruck gleich dem Druck in der Druckkammer 12 bzw. 18 ist).

Daraufhin steigt der Druck in der Druckkammer 12 bzw. 18 relativ langsam bis die nächste AUS-Phase (Fig. 4) beginnt. Der Druck in den Leitungen 66 bzw. 69 bricht dann schnell zusammen, während die Rückschlagventile 55 bzw. 45 dafür sorgen, daß der Druck in der Druckkammer 12 bzw. 18 nur langsam absinkt und zwar etwa nach einer e-Funktion. Letzteres ist eine Folge der Lecköl-Verluste der Zylinder. Der Druck in der Druckkammer mit dem höheren Druck ist also mit einer Pulsation überlagert, die aber bezogen auf den Mitteldruck klein genug ist, um die Funktion nicht zu beeinträchtigen.

Die Schaltfrequenz ist demnach so zu wählen, daß jede AUS-Phase kurz genug ist, um zu garantieren, daß der Druck in der Druckkammer 12 bzw. 18 "praktisch" konstant bleibt.

Das Tastverhältnis zwischen der ersten und zweiten Position wird vorzugsweise durch ein pulsbreitenmoduliertes EIN/AUS-Ventil (nicht dargestellt) eingestellt, das den Ventilschieber und somit die Steuerkante 60 des Ventiles 30 zwischen der ersten und zweiten Position hin- und herschiebt. Das EIN/AUS-Ventil wird durch ein ebenfalls nicht dargestelltes elektronisches Steuergerät gesteuert.

Um eine akustische Anregung des Getriebegehäuses zu vermeiden, wird vorzugsweise an der Steuerkante 60 eine konische Abschrägung 67 vorgesehen, die einen abrupten Druckanstieg beim Umschalten zwischen der ersten und zweiten Position vermeidet.

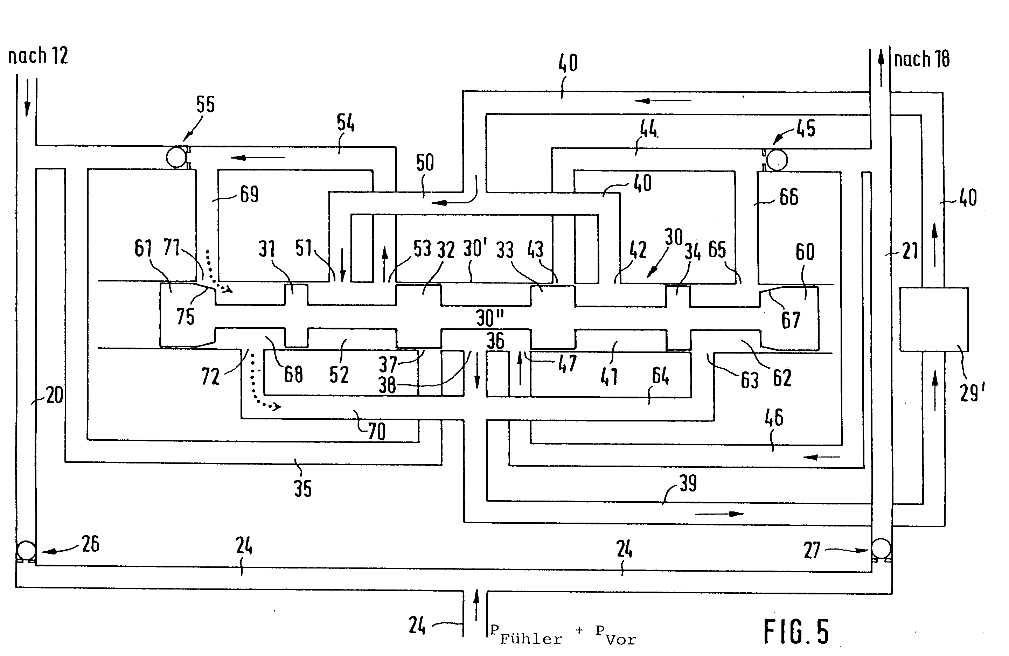

In der anderen Stellung des Umpolventiles 30 (Ölförderung von der Druckkammer 18 in die Druckkammer 12) kann ebenfalls eine Verschiebung des Ventilschiebers 30'' des Umpolventiles 30 zwischen einer ersten Position (Fig. 3) und einer zweiten Position (Fig. 5) erfolgen. Dabei bestimmt die Steuerkante 61 mit der Steuerkante 31 eine Kammer (fünfte Kammer) 68 mit einem Zugang 72, der über eine Leitung 70 mit der Saugseite (Leitung 39) der Zahnradpumpe 29' in Verbindung steht. Die Steuerkante 61 verschließt in der ersten Position (Fig. 3) des Ventiles 30 einen weiteren Zugang 71 zur Kammer 68, der über eine Leitung 69 mit der Förderseite (Leitung 54) der Pumpe 29' in Verbindung steht. Dies bedeutet, daß in der ersten Position des Ventiles 30 der Druck an der Förderseite der Zahnradpumpe 29' schnell auf den Wert ansteigt, ab dem sich das Rückschlagventil 55 öffnet und in die Druckkammer 12 gefördert wird. In der in Fig. 5 dargestellten Weise ist der Zugang 71 in der zweiten Position des Ventiles 30 durch die Steuerkante 61 geöffnet, so daß Druckmittel von der Förderseite (Leitung 54) über die Leitung 69, die Kammer 68 und Leitung 70 zur Ansaugseite (Leitung 39) der Zahnradpumpe 29' strömen kann, wie dies durch die punktieren Pfeile dargestellt ist. Dabei wird Druckmittel druck- und leistungslos umgepumpt. Durch das Hin- und Herschieben des Ventilschiebers 30'' zwischen der ersten und zweiten Position können in der anderen Stellung des Ventilschiebers 30'' ebenfalls die zuvor bereits beschriebenen Vorteile erzielt werden, die bei der Hin- und Herbewegung des Ventilschiebers 30'' zwischen der ersten und zweiten Position in der anderen Stellung des Ventilschiebers 30'' erzielbar sind. Die Hin- und Herverschiebung des Ventilschiebers 30'' erfolgt vorteilhafterweise durch das bereits erwähnte pulsbreitenmodulierte EIN/AUS-Ventil (nicht dargestellt). Zur Vermeidung einer akustischen Anregung des Getriebegehäuses wird vorzugsweise auch an der Steuerkante 61 eine konische Abschrägung 75 vorgesehen, die einen abrupten Druckanstieg beim Umschalten zwischen der ersten und zweiten Position vermeidet.

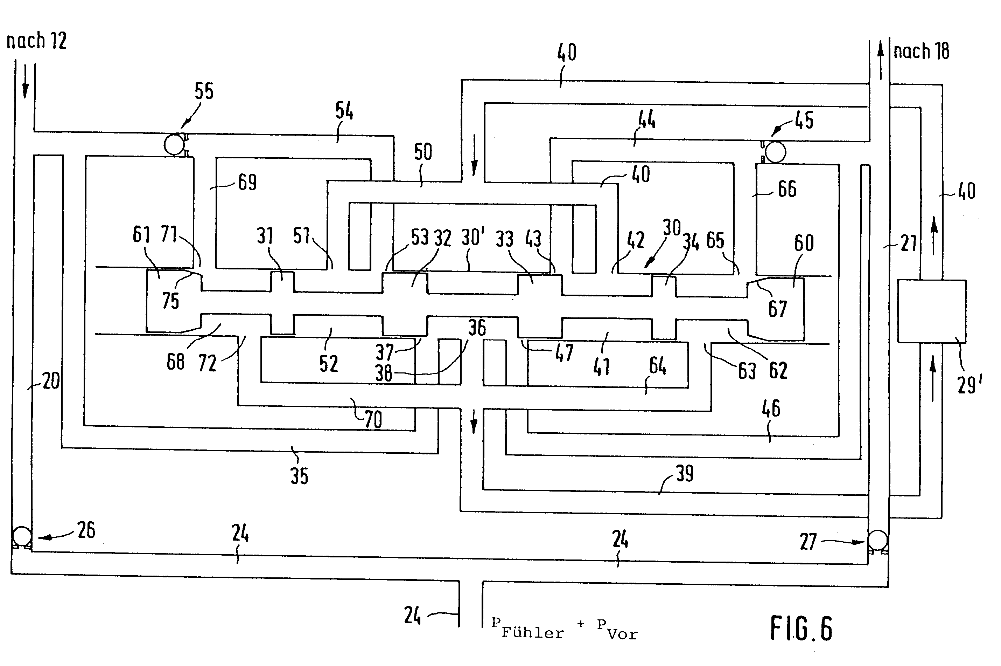

Aus der Fig. 6 geht eine transiente Zwischenstellung hervor, gemäß der das Ventil 30 sich in der Mitte zwischen den zu den beiden Förderrichtungen gehörenden Lagen befindet. Dieser Zustand tritt nur bei Wechsel der Förderrichtung auf und soll "sehr schnell" durchfahren werden.

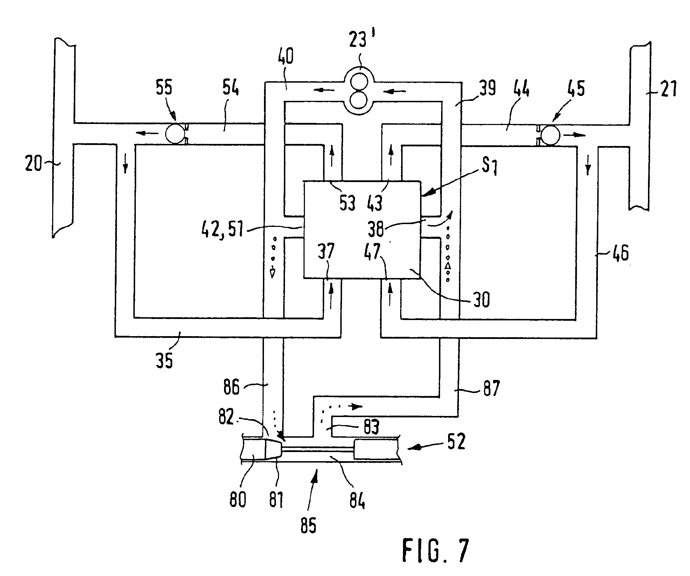

Im Zusammenhang mit Fig. 7 wird eine Weiterbildung der vorliegenden Übersetzungsregelung beschrieben, bei der das Umpol- und Regulierventil dem bereits beschriebenen Ventil 30 entspricht, wobei jedoch die Steuerkanten 60 und 61, die Kammern 62, 68 und die Leitungen 66, 64, 69, 70 nicht vorgesehen sind. Um dennoch eine druck- und damit leistungslose Zurückbeförderung des Förderstromes der Zahnradpumpe 29' zur Ansaugseite zu ermöglichen wird ein eigenes Anstauventil 85 vorgesehen, über das die Förderseite mit der Ansaugseite der Zahnradpumpe 29' verbunden ist. Das Anstauventil 85 wird durch ein Signal S2 getaktet, wie dies zuvor im Zusammenhang mit der Taktung des Ventilschiebers 30'' zwischen den beiden Positionen beschrieben wurde. Genauer gesagt weist das Anstauventil 85 eine Kammer 84 auf, die eine Öffnung 82, die mit einer zur Förderseite führenden Leitung 86 verbunden ist, und eine Öffnung 83 besitzt, die mit einer zur Saugseite führenden Leitung 87 verbunden ist. Eine Steuerkante 80 ist zwischen zwei Positionen verschiebbar, wobei sie in der ersten Position die Öffnung 82 verschließt, so daß keine Zurückbeförderung des Förderstromes möglich ist, und in der zweiten Position die Öffnung 82 freigibt, so daß diese über die Kammer 84 mit der Öffnung 83 verbunden wird, so daß eine Zurückbeförderung des Förderstromes der Zahnradpumpe 29' zur Saugseite über die Leitung 87 erfolgt. Die Steuerkante 80 kann ebenfalls eine Abschrägung 81 aufweisen, deren Funktion und Struktur den bereits beschriebenen Abschrägungen 67 bzw. 75 entspricht. Die erste und zweite Position des Anstauventiles 85 entspricht funktionsmäßig den beschriebenen ersten bzw. zweiten Positionen der Steuerkante 60 bzw. 61. Statt der Öffnung 82 kann die Steuerkante 80 auch der Öffnung 83 zugeordnet sein.

## Patentansprüche

1. Einrichtung zur Übersetzungsregelung eines stufenlos regelbaren Kegelscheibengetriebes für Kraftfahrzeuge, wobei das Kegelscheibengetriebe primärseitig ein erstes Kegelscheibenteil (4) und ein zweites Kegelscheibenteil (5), zwischen denen ein Riemen (3) verläuft, und sekundärseitig ein erstes Kegelscheibenteil (6) und ein zweites Kegelscheibenteil (7), zwischen denen der Riemen (3) verläuft, aufweist, wobei das primärseitige erste und zweite Kegelscheibenteil (4, 5) eine primärseitige Druckkammer (12) und das sekundärseitige erste und zweite Kegelscheibenteil (6, 7) eine sekundärseitige Druckkammer (18) bilden, und wobei beim Einbringen eines Druckmittels in die primärseitige Druckkammer (12) über eine erste Leitung (20) und in die sekundärseitige Druckkammer (18) über eine zweite Leitung (21) jeweils der Anpreßdruck zum Anpressen des primärseitigen ersten und zweiten Kegelscheibenteiles (4, 5) und des sekundärseitigen ersten und zweiten Kegelscheibenteiles (5, 6) an den Riemen (3) erzeugt wird, dadurch gekennzeichnet, daß in der ersten Leitung (20) ein erstes Rückschlagventil (26) angeordnet ist, das gegen den Druck des in der primärseitigen Druckkammer (12) befindlichen Druckmittels zu öffnen ist, daß in der zweiten Leitung (21) ein zweites Rückschlagventil (27) angeordnet ist, das gegen den Druck des in der sekundärseitigen Druckkammer (18) befindlichen Druckmittels zu öffnen ist, und daß in einer Verbindungsleitung (28), die den Bereich der ersten Leitung (20) zwischen der primärseitigen Druckkammer (12) und dem ersten Rückschlagventil (26) und den Bereich der zweiten Leitung (21) zwischen der sekundärseitigen Druckkammer (18) und dem zweiten Rückschlagventil (27) verbindet, eine Verstellpumpe (29) angeordnet ist, die abhängig von einem Steuersignal (S) zur Übersetzungsregelung Druckmittel von der primärseitigen Druckkammer (12) in die sekundärseitige Druckkammer (18) und umgekehrt pumpen kann, und zwar mit einer kontinuierlich variablen Fördermenge, die ebenfalls von dem Steuersignal kontrolliert wird.

2. Einrichtung nach Anspruch 1, dadurch gekennzeichnet, daß an Stelle einer Verstellpumpe (29) eine Kombination aus einer vom Motor des Kraftfahrzeuges angetriebenen Zahnradpumpe (29') und einem in der Verbindungsleitung (35, 39, 40, 44, 46, 54) liegenden Umpol- und Regulierventil (30) vorgesehen ist, welches zum Umpolen und Regulieren des durch die Verbindungsleitung (35, 39, 40, 44, 46, 54) fließenden und durch die Zahnradpumpe (29') geförderten Druckmittels dient, und dessen Ventilschieber (30'') durch ein pulsbreitenmoduliertes EIN-AUS-Magnetventil mit einer gewissen Frequenz hin- und herbewegbar ist.

3. Einrichtung nach Anspruch 2, dadurch gekennzeichnet, daß das Umpol- und Regulierventil (30) in einem Ventilgehäuse (30') den Ventilschieber (30'') aufweist, der zwischen einer Stellung, in der die Zahnradpumpe (29') Druckmittel von der primärseitigen Druckkammer (12) in die sekundärseitige Druckkammer (18) fördert, und einer anderen Stellung verschiebbar ist, in der die Zahnradpumpe (29') Druckmittel von der sekundärseitigen Druckkammer (18) in die primärseitige Druckkammer (12) fördert.

4. Einrichtung nach Anspruch 3, dadurch gekennzeichnet, daß das Umpol- und Regulierventil (30) einen ersten, mit dem Bereich der ersten Leitung (20) verbundenen Zugang (37), einen zweiten, mit der Saugseite der Zahnradpumpe (29') verbundenen Zugang (38) und einen dritten, mit dem Bereich der zweiten Leitung (21) verbundenen Zugang (47) zu einer ersten Kammer (36) zwischen einer ersten und zweiten Steuerkante (32, 33) am Ventilschieber (30'') aufweist, der in der einen Stellung des Umpolventiles (30) den ersten und zweiten Zugang (37, 38) miteinander verbindet und in der anderen Stellung den zweiten und dritten Zugang (38, 47) miteinander verbindet, daß in der einen Stellung die zweite Steuerkante (33) den dritten Zugang (47) und in der anderen Stellung die erste Steuerkante (32) den ersten Zugang (37) dicht verschließt, daß das Umpolventil (30) einen vierten Zugang (43), der mit dem Bereich der zweiten Leitung (21) verbunden ist, einen fünften Zugang (42), der mit der Förderseite der Zahnradpumpe (29') verbunden ist und eine zweite Kammer (41) aufweist, die in der einen Stellung den vierten und fünften Zugang miteinander verbindet, daß in der anderen Stellung die zweite Steuerkante (33) den vierten Zugang (43) verschließt, daß in der den vierten Zugang (43) mit dem Bereich der zweiten Leitung (21) verbindenden Leitung (44) ein drittes Rückschlagventil (45) angeordnet ist, das sich bei einer Druckbeaufschlagung in Richtung auf die zweite Leitung (21) öffnen kann, daß das Umpolventil (30) einen sechsten Zugang (51), der mit der Förderseite der Zahnradpumpe (29′) verbunden ist, einen siebten Zugang (53), der mit dem Bereich der ersten Leitung (20) verbunden ist, und eine dritte Kammer (52) aufweist, die in der anderen Stellung den sechsten Zugang (51) mit dem siebten Zugang (53) verbindet, daß in der einen Stellung die erste Steuerkante (32) den siebten Zugang (53) verschließt, und daß in der den siebten Zugang (53) mit dem Bereich der ersten Leitung (20) verbindenden Leitung (54) ein viertes Rückschlagventil (55) vorgesehen ist, das sich bei einer Druckbeaufschlagung in Richtung auf die erste Leitung (20) öffnen kann.

5. Einrichtung nach einem der Ansprüche 2 bis 4, dadurch gekennzeichnet, daß der Ventilschieber (30'') des Umpol- und Regulierventiles (30) sowohl in der einen Stellung als auch in der anderen Stellung jeweils zwischen einer ersten Position, in der eine drucklose Druckmittelrückführung von der Förderseite zur Saugseite der Verstellpumpe (29) erfolgt, und einer zweiten Position, in der das Druckmittel angestaut wird, taktbar ist.

6. Einrichtung nach Anspruch 5, dadurch gekennzeichnet, daß der Ventilschieber (30'') des Umpol- und Regulierventiles (30) zwischen der dritten Steuerkante (34) und einer fünften Steuerkante (60) eine vierte Kammer (62) aufweist, welche mit einem achten Zugang (63), der mit der Saugseite der Zahnradpumpe (29') verbunden ist und einem neunten Zugang (65), der mit der den vierten Zugang (43) mit der zweiten Leitung (21) verbindenden Leitung (44) an einem Ort verbunden ist, der sich zwischen dem dritten Ruckschlagventil (45) und dem vierten Zugang (43) befindet, daß in der einen Stellung und in der ersten Position die fünfte Steuerkante (60) den neunten Zugang (65) verschließt, daß in der einen Stellung und in der zweiten Position die fünfte Steuerkante (60) den neunten Zugang (65) zur Druckmittelrückführung über die vierte Kammer (62) und den achten Zugang (63) zur Saugseite der Zahnradpumpe (29') weit genug öffnet, um bei allen auftretenden Durchflüssen des Druckmittels eine praktisch verschwindende Druckdifferenz zwischen dem neunten Zugang (65) und der vierten Kammer (62) zu gewährleisten, daß das Umpolventil eine fünfte Kammer (68) zwischen der vierten Steuerkante (31) und einer sechsten Steuerkante (61) mit einem zehnten Zugang (71), der mit der den siebten Zugang (53) mit der ersten Leitung (20) verbindenden Leitung (54) verbunden ist, und einem elften Zugang (72), der mit der Saugseite der Zahnradpumpe (29') verbunden ist, aufweist, daß der zehnte Zugang (71) mit der den siebten Zugang (53) mit der Leitung (20) verbindenden Leitung (54) an einem Ort zwischen dem vierten Rückschlagventil (55) und dem siebten Zugang (53) verbunden ist, daß in der anderen Stellung und der ersten Position die sechste Steuerkante (61) den zehnten Zugang (71) verschließt und in der anderen Stellung und der zweiten Position die sechste Steuerkante (61) den zehnten Zugang (71) zur Druckmittelrückführung über die fünfte Kammer (68) und den elften Zugang (72) zur Saugseite der Zahnradpumpe (29) weit genug öffnet, um bei allen auftretenden Durchflüssen des Druckmittels eine praktisch verschwindende Druckdifferenz zwischen dem zehnten Zugang (71) und der fünften Kammer (68) zu gewährleisten.

7. Einrichtung nach Anspruch 6, dadurch gekennzeichnet, daß die fünfte Steuerkante (60) und die sechste Steuerkante (61) jeweils einen konischen Bereich (67 bzw. 75) aufweisen, der einen abrupten Übergang zwischen der den neunten Zugang (65) bzw. den zehnten Zugang (71) in der ersten Position verschließenden Anordnung der fünften Steuerkante (60) bzw. der sechsten Steuerkante (61) und der in der zweiten Position den neunten Zugang (65) bzw. den zehnten Zugang (71) weitgehend freigebenden Anordnung der fünften Steuerkante (60) bzw. der sechsten Steuerkante (71) verhindert.

8. Einrichtung nach einem der Ansprüche 1 bis 4, dadurch gekennzeichnet, daß ein Anstauventil (85) zwischen der Saugseite und der Förderseite der Zahnradpumpe (29') vorgesehen ist, und daß das Anstauventil zwischen einer ersten Position, in der eine drucklose Druckmittelrückführung von der Förderseite zur Saugseite der Zahnradpumpe (29') erfolgt, und einer zweiten Position taktbar ist, in der das Druckmittel angestaut wird.

9. Einrichtung nach Anspruch 8, dadurch gekennzeichnet, daß das Anstauventil (85) einen Raum (84), der über einen ersten Zugang (82) mit der Förderseite und über einen zweiten Zugang (83) mit der Saugseite der Zahnradpumpe (29') verbunden ist, aufweist, und daß eine taktbare Steuerkante (80) in der ersten Position den ersten oder zweiten Zugang (82, 83) im wesentlichen verschließt und in der zweiten Position den ersten oder zweiten Zugang weit genug öffnet, um bei allen auftretenden Durchflüssen des Druckmittels eine praktisch verschwindende Druckdifferen zwischen der Förderseite und der Saugseite zu gewährleisten.

## Claims

1. A transmission ratio control device for a controllable, continually variable V-belt transmission for motor vehicles, whereby on -the primary side the V-belt transmission comprises a first V-belt part (4) and a second V-belt part (5), between which a belt (3) extends, and on the secondary side it comprises a first V-belt part (6) and a second V-belt part (7), between which the belt (3) extends, whereby the primary first and second V-belt parts (4, 5) form a primary pressure chamber (12) and the secondary first and second V-belt parts (6, 7) form a secondary pressure chamber (18), and whereby with the introduction of a hydraulic fluid into the primary pressure chamber (12) via a first line (20) and into the secondary pressure chamber (18) via a second line (21) the pressure is produced for pressing the primary first and second V-belt parts (4, 5) and the secondary first and second V-belt parts (5, 6) against the belt (3),
**characterised in that** in the first line (20) is disposed a first check valve (26), which is to open against the pressure of the hydraulic fluid in the primary pressure chamber,
**in that** in the second line (21) is disposed a second check valve (27), which is to open against the pressure of the hydraulic fluid in the secondary pressure chamber (18),
**and in that** in a connecting line (28), which connects the region of the first line (20), between the primary pressure chamber (12) and the first check valve (26), and the region of the second line (21) between the secondary pressure chamber (18) and the second check valve (27), is disposed an adjustable pump (29), which, dependent on a control signal (S) for the transmission ratio control can pump hydraulic fluid from the primary pressure chamber (12) into the secondary pressure chamber (18) and vice versa, and in fact with a continually variable flow rate, which is also controlled by the control signal.

2. A device according to Claim 1,
**characterised in that** instead of an adjustable pump (29) is provided a combination consisting of a gear pump (29') driven by the engine of the motor vehicle and a reversing and regulating valve (30) lying in the connecting line (35, 39, 40, 44, 46, 54), which is used to reverse and regulate the hydraulic fluid flowing through the connecting line (35, 39, 40, 44, 46, 54) and conveyed by the gear pump (29'), and the valve spool (30'') of which can be moved to and fro by a pulse-width modulated ON/OFF solenoid valve having a certain frequency.

3. A device according to Claim 2,
**characterised in that** in a valve housing (30') the reversing and regulating valve (30) comprises the valve spool (30''), which can be displaced between a location in which the gear pump (29') conveys hydraulic fluid from the primary pressure chamber (12) into the secondary pressure chamber (18), and another location, in which the gear pump (29') conveys hydraulic fluid from the secondary pressure chamber (18) into the primary pressure chamber (12).

4. A device according to Claim 3,
**characterised in that** the reversing and regulating valve (30) comprises a first inlet (37) connected to the region of the first line (20), a second inlet (38) connected to the suction side of the gear pump (29') and a third inlet (47), connected to the region of the second line (21), to a first chamber (36) between a first and second control edge (32, 33) at the valve spool (30''), which in one location of the reversing valve (30) connects the first and second inlets (37, 38) to one another and in the other location connects the second and third inlets (38, 47) to one another,
**in that** in one location the second control edge (33) tightly closes the third inlet (47) and in the other location the first control edge (32) tightly closes the first inlet (37),
**in that** the reversing valve (30) comprises a fourth inlet (43) connected to the region of the second line (21), a fifth inlet (42) connected to the delivery side of the gear pump (29') and a second chamber (41), which in one location connects the fourth and fifth inlets to one another,
**in that** in the other location the second control edge (33) closes the fourth inlet (43),
**in that** in the line (44) connecting the fourth inlet (43) to the region of the second line (21) is disposed a third check valve (45), which can be opened with a supply of pressure towards the second line (21),
**in that** the reversing valve (30) comprises a sixth inlet (51) connected to the delivery side of the gear pump (29'), a seventh inlet (53) connected to the region of the first line (20), and a third chamber (52), which in the other location connects the sixth inlet (51) with the seventh inlet (53),
**in that** in one location the first control edge (32) closes the seventh inlet (53),
**and in that** in the line (54) connecting the seventh inlet (53) to the region of the first line (20) is provided a fourth check valve (55), which can be opened with a supply of pressure towards the first line (20).

5. A device according to one of Claims 2 to 4,
**characterised in that** the valve spool (30'') of the reversing and regulating valve (30) can be moved both in one location and also in the other location between a first position, in which an unpressurised return of hydraulic fluid occurs from the delivery side to the suction side of the adjustable pump (29), and a second position, in which the hydraulic fluid is banked up.

6. A device according to Claim 5,
**characterised in that** between the third control edge (34) and a fifth control edge (60) the valve spool (30'') of the reversing and regulating valve (30) comprises a fourth chamber (62), which is connected to an eighth inlet (63), connected to the suction side of the gear pump (29'), and a ninth inlet (65), connected to line (44) connecting the fourth inlet (43) to the second line (21) at a place which is located between the third check valve (45) and the fourth inlet (43),
**in that** in one location and in the first position the fifth control edge (60) closes the ninth inlet (65),
**in that** in one location and in the second position the fifth control edge (60) opens the ninth inlet (65) for the return of hydraulic fluid via the fourth chamber (62) and the eighth inlet (63) to the suction side of the gear pump (29') far enough in order to guarantee a practically vanishing pressure differential between the ninth inlet (65) and the fourth chamber (62) with all flows of the hydraulic fluid that occur,
**in that** the reversing valve comprises a fifth chamber (68) between the fourth control edge (31) and a sixth control edge (61) with a tenth inlet (71) connected to the line (54) connecting the seventh inlet (53) with the first inlet (20), and an eleventh inlet (72) connected to the suction side of the gear pump (29'),
**in that** the tenth inlet (71) is connected to the line (54) connecting the seventh inlet (53) to the line (20) at a place between the fourth check valve (55) and the seventh inlet (53),
**in that** in the other location and the first position the sixth control edge (61) closes the tenth inlet (71) and in the other location and the second position the sixth control edge (61) opens the tenth inlet (71) for the return of hydraulic fluid via the fifth chamber (68) and the eleventh inlet (72) to the suction side of the gear pump (29) far enough in order to guarantee a practically vanishing pressure differential between the tenth inlet (71) and the fifth chamber (68) with all flows of the hydraulic fluid that occur.

7. A device according Claim 6,
**characterised in that** the fifth control edge (60) and the sixth control edge (61) each comprise a conical region (67 and 75 respectively), which prevents an abrupt transition between the arrangement of the fifth control edge (60) and respectively the sixth control edge (61) which in the first position closes the ninth inlet (65) or the tenth inlet (71) respectively and the arrangement of the fifth control edge (60) or the sixth control edge (71) respectively largely freeing the ninth inlet (65) or the tenth inlet (71) respectively.

8. A device according to one of Claims 1 to 4,
**characterised in that** a regulating valve (85) is provided between the suction side and the delivery side of the gear pump (29'),
**and in that** the regulating valve can be moved between a first position, in which an unpressurised return of hydraulic fluid occurs from the delivery side to the suction side of the gear pump (29'), and a second position, in which the hydraulic fluid is banked up.

9. A device according to Claim 8,
**characterised in that** the regulating valve (85) comprises a chamber (84), which is connected via a first inlet (82) to the delivery side and via a second inlet (83) to the suction side of the gear pump (29'),
**and in that** in the first position a moveable control edge (80) substantially closes the first or second inlet (82, 83) and in the second position opens the first or second inlet far enough in order to guarantee a practically vanishing pressure differential between the delivery side and the suction side with all flows of hydraulic fluid that occur.

## Revendications

1. Dispositif pour la régulation du rapport de transmission d'un variateur à poulies coniques, à réglage progressif, pour véhicules, la transmission à poulies coniques, le variateur à poulies coniques comportant côté primaire un premier élément de poulie conique (4) et un deuxième élément de poulie conique (5) entre lesquels passe une courroie (3), et côté secondaire, un premier élément de poulie conique (6) et un deuxième élément de poulie conique (7) entre lesquels passe la courroie (3), les premier et deuxième éléments de poulie conique (4, 5) côté primaire formant une chambre de pression (12) côté primaire et les premier et deuxième éléments de poulie conique (6, 7) côté secondaire formant une chambre de pression (18).côté secondaire et la pression pour repousser les premier et deuxième éléments de poulie conique (4, 5) et les premier et deuxième éléments de poulie conique (6, 7) sur la courroie (3) étant obtenue par l'introduction d'un fluide de pression dans la chambre de pression (12) côté primaire par l'intermédiaire d'une première conduite (20) et dans la chambre de pression (18) côté secondaire par l'intermédiaire d'une deuxième conduite (21), caractérisé par le fait qu'une première soupape anti-retour (26) est disposée dans la première conduite (20), laquelle soupape s'ouvre sous l'action de la pression du fluide contenu dans la chambre (12) côté primaire, par le fait qu'une deuxième soupape anti-retour (27) est disposée dans la deuxième conduite (21), laquelle soupape s'ouvre sous l'action de la pression du fluide contenu dans la chambre (18) côté secondaire et par le fait qu'une pompe (29) à cylindrée variable est disposée dans une conduite de liaison (28) qui relie la partie de la première conduite (20) située entre la chambre de pression (12) côté primaire et la première soupape anti-retour (26) et la partie de la deuxième conduite (21) située entre la deuxième chambre de pression (18) côté secondaire et la deuxième soupape anti-retour (27), laquelle pompe, en fonction d'un signal de commande (S) de régulation de rapport de transmission peut envoyer du fluide de pression de la chambre (12) côté primaire dans la chambre (18) côté secondaire et inversement, cela avec un débit qui peut varier de manière progressive et est également contrôlé par le signal de commande.

2. Dispositif selon la revendication 1, caractérisé par le fait qu'il est prévu à la place de la pompe (29) à cylindrée variable, une combinaison formée d'une pompe à engrenages (29') entraînée par le moteur du véhicule et d'une soupape (30) de régulation et d'inversion insérée dans la conduite de liaison (35, 39, 40, 44, 46, 54), soupape qui sert à inverser et à réguler le fluide refoulé par la pompe à engrenages (29') circulant dans la conduite de liaison (35, 39, 40, 44, 46, 54) et dont le tiroir (30'') peut être déplacé avec une certaine fréquence par une électrovanne Marche-Arrêt à modulation d'impulsion en durée.

3. Dispositif selon la revendication 2, caractérisé par le fait que la soupape (30) de régulation et d'inversion présente dans un corps (30') le tiroir (30'') qui peut être déplacé entre une première positions dans laquelle la pompe à engrenages (29') refoule du fluide de la chambre de pression (12) côté primaire dans la chambre de pression (18) côté secondaires et une deuxième positions dans laquelle la pompe à engrenage (29') refoule du fluide de la chambre de pression (18) côté secondaire dans la chambre de pression (12) côté primaire.

4. Dispositif selon la revendication 3, caractérisé par le fait que la soupape (30) de régulation et d'inversion présente un premier orifice (37) connecté à la partie de la première conduite (20), un deuxième orifice (38) connecté au côté refoulement de la pompe à engrenages (29') et un troisième orifice (47) connecté à la partie de la deuxième conduite (21) dans une première chambre (36) située entre ue premier et un deuxième bord de commande (32, 33) du tiroir (30") qui, dans une position de la soupape d'inversion (30), relie entre eux les premièr et deuxième orifices (37, 38) et dans l'autre position relie entre eux les deuxième et troisième orifices (38, 47), par le fait que dans une position, le deuxième bord de commande (33) ferme de manière étanche le troisième orifice (47) et dans l'autre position le premier bord de commande (32) ferme de manière étanche le premier orifice (37), par le fait que la soupape d'inversion (30) comporte un quatrième orifice (43) qui est connecté à la partie de la deuxième conduite (21), un cinquième orifice (42) qui est connecté au côté refoulement de la pompe à engrenages (29') et une deuxième chambre (41) qui, dans une position relie entre eux les quatrième et cinquième orifices, par le fait que dans l'autre position, le deuxième bord de commande (33) ferme le quatrième orifice (43), par le fait qu'une troisième soupape anti-retour (45) est disposée dans la conduite (44) qui relie le quatrième orifice (43) à la partie de la deuxième conduite (21) et peut s'ouvrir dans la direction de la deuxième conduite (21) lorsqu'une pression lui est appliquée, par le fait que la soupape d'inversion (30) présente un sixième orifice (51) connecté au côté refoulement de la pompe à engrenages (29'), un septième orifice (53) connecté à la partie de la première conduite (20) et une troisième chambre (52) qui, dans l'autre position, relie entre eux le sixième orifice(51) et le septième orifice (53), par le fait que dans l'une des positions le premier bord de commande (32) ferme le septième orifice (53) et par le fait qu'il est prévu, dans la conduite (54) qui relie le septième orifice (53) à la partie de la première conduite (20), une quatrième soupape anti-retour (55) qui peut s'ouvrir en direction de la première conduite (20) lorsqu'une pression lui est appliquée.

5. Dispositif selon l'une des revendications 2 à 4, caractérisé par le fait que le tiroir (30'') de la soupape d'inversion et de régulation (30) aussi bien dans l'une des positions que dans l'autre position, peut être commandée de manière synchrone entre une première position dans laquelle le fluide de pression s'écoule sans pression du côté refoulement vers le côté aspiration de la pompe à débit variable (29) et une deuxième position dans laquelle le fluide de pression est bloqué.

6. Dispositif selon la revendication 5, caractérisé par le fait que le tiroir (30'') de la soupape d'inversion et de régulation (30) présente, entre le troisième bord de commande (34) et un cinquième bord de commande (60), une quatrième chambre (62) qui relie entre eux un huitième orifice (63) connecté au côté aspiration de la pompe à engrenages (29') et un neuvième orifice (65) connecté à la conduite (4) reliant le quatrième orifice (43) à la deuxième conduite (21) en un point situé entre la troisième soupape anti-retour (45) et le quatrième orifice (43), par le fait que dans l'une des positions et dans la première position, le cinquième bord de commande (60) ferme le neuvième orifice (65) et dans l'autre position et la deuxième position, le cinquième bord de commande (60) ouvre l'orifice (65) pour le retour du fluide de pression par l'intermédiaire de la quatrième chambre (62) et la huitième orifice (63) en direction du côté aspiration de la pompe à engrenages (29') sufisamment pour assurer pour tous les débits de fluide de pression une différence de pression pratiquement nulle entre le neuvième orifice (65) et la quatrième chambre (62), par le fait que la soupape d'inversion présente une cinquième chambre (68) entre le quatrième bord de commande (31) et un sixième bord de commande (61) avec un dixième orifice (71) qui est connecté à la conduite (54) reliant le septième orifice (53) à la première conduite (20) et une onzième orifice (72) qui est connecté au côté aspiration de la pompe à engrenages (29'), par le fait que le dixième orifice (71) est connectée à la conduite (54) qui relie le septième orifice (53) à la conduite (20) en un point situé entre la quatrième soupape anti-retour (55) et le septième orifice (53), par le fait que dans l'autre position et dans la première position, le sixième bord de commande (61) ferme le dixième orifice (71) et dans l'autre position et dans la deuxième position, le sixième bord de commande (61) ouvre le dixième orifice (71) pour le retour du fluide de pression vers le côté aspiration de la pompe à engrenages (29) par l'intermédiaire de la cinquième chambre (68) et du onzième orifice (72), suffisamment pour assurer, pour tous les débits du fluide de pression, une différence de pression pratiquement nulle entre le dixième orifice (71) et la cinquième chambre (68).

7. Dispositif selon la revendication 6, caractérisé par le fait que le cinquième bord de commande (60) et le sixième bord de commande (61) présentent chacun une zone conique (67 et 75) qui évite un passage brutal de la position du cinquième bord de commande (60) et du sixième bord de commande (61) fermant la neuvième orifice (65) et le dixième orifice (71) dans la première position à la position du cinquième bord de commande (60) et du sixième bord de commande (61) qui libère largement le neuvième orifice (65) et le dixième orifice (71) dans la deuxième position.

8. Dispositif selon l'une des revendications 1 à 4, caractérisé par le fait qu'il est prévu une soupape de barrage (85) entre le côté aspiration et le côté refoulement de la pompe à engrenages (29') et par le fait que la soupape de barrage peut être déplacée de manière synchrone entre une première position dans laquelle le fluide de pression s'écoule sans pression du côté refoulement vers le côté aspiration de la pompe (29') et une deuxième position dans laquelle le passage du fluide est bloqué.

9. Dispositif selon la revendication 8, caractérisé par le fait que la soupape de barrage (85) présente une chambre (84) qui est liée au côté refoulement par un première orifice (82) et au côté aspiration par un deuxième orifice (83) et par le fait qu'un bord de commande (80) qui peut être déplacé de manière synchrone ferme essentiellement le première ou le deuxième orifice (82, 83) dans une première position et dans la deuxième position ouvre suffisamment le première ou le deuxième orifice pour assurer pour tous les débits de fluide possibles une différence de pression quasiment nulle entre le côté refoulement et le côté aspiration.
